# EUROPÄISCHE PATENTSCHRIFT

(11) **EP 1 792 109 B1**
(45) Veröffentlichungstag und Bekanntmachung des Hinweises auf die Patenterteilung: **03.09.2008**
(21) Anmeldenummer: 05797980.9
(22) Anmeldetag: 16.09.2005
(51) Int. Cl.: F16J 15/10, F16K 15/02

(54) **DICHTBUCHSE, HYDRAULISCHES GERÄT UND RÜCKSCHLAGVENTIL**
SEALING BUSH, HYDRAULIC UNIT, AND CHECK VALVE
DOUILLE ETANCHE, APPAREIL HYDRAULIQUE ET CLAPET ANTIRETOUR

(30) Priorität: 17.09.2004 DE 102004045582; 02.12.2004 DE 102004058302
(43) Veröffentlichungstag der Anmeldung: 06.06.2007
(73) Patentinhaber: Bosch Rexroth AG, 70184 Stuttgart (DE)
(72) Erfinder: KANE, Brian, 97816 Lohr am Main (DE); SCHMITT, Bernd, 97848 Rechtenbach (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2005/001630
(87) Internationale Veröffentlichungsnummer: WO 2006/029614

(56) Entgegenhaltungen:
- EP-A- 0 268 520
- DE-A1- 3 333 086
- DE-A1- 4 301 004
- DE-B1- 1 900 352

## Beschreibung

Die Erfindung betrifft eine Dichtbuchse gemäß dem Oberbegriff des Patentanspruchs 1 sowie ein mit einer derartigen Dichtbuchse ausgeführtes hydraulisches Gerät und ein Rückschlagventil.

In den Datenblätter RD 20 395/12.95 und RD 21 523/10.95 der Anmelderin sind Rückschlagventile offenbart, bei denen eine metallischer Schließkörper über eine Feder gegen einen Ventilsitz vorgespannt ist. Diese Feder stützt' sich rückseitig an einer Dichtbuchse ab, der in einen Druckmittelströmungskanal einer das Rückschlagventil aufnehmenden Platte oder eines Gehäuses eingesetzt ist. Diese Dichtbuchse ist bei der bekannten Lösung ebenfalls aus Metall hergestellt und trägt einen Dichtring, über den eine Leckage entlang des Außenumfangs der Dichtbuchse verhindert ist.

Eine derartige Dichtbuchse ist relativ aufwendig zu fertigen, da sie spanend aus Metall hergestellt werden muss und der Dichtring als separates Bauteil auf den Außenumfang aufgesetzt wird.

In der DE 1 900 352 und in der DE 43 01 004 sind Sitzringe offenbart. Diese weisen einen recht komplizierten Aufbau auf, der in Bezug auf die Herstellung und/oder die Montage nachteilig ist und sind des Weiteren nur zur radialen Abdichtung geeignet.

Die DE 33 33 086 offenbart ein Ventil mit einem Schließkörper, der über eine an einer Dichtbuchse abgeteilten Feder gegen einen Ventilsitz vorgespannt ist.

Der Erfindung liegt die Aufgabe zugrunde, eine Dichtbuchse sowie ein mit einer derartigen Dichtbuchse ausgeführtes hydraulisches Gerät und Rückschlagventil zu schaffen bei denen der Aufwand zur Fertigung der Dichtbuchse gegenüber der bekannten Lösung bei guter Dichtwirkung verringert ist.

Diese Aufgabe wird hinsichtlich der Dichtbuchse durch die Merkmale des Patentanspruchs 1, hinsichtlich des Rückschlagventils durch die Merkmale des Patentanspruchs 11 und hinsichtlich des hydraulischen Geräts durch die Merkmale des Patentanspruchs 13 gelöst.

Erfindungsgemäß ist die Dichtbuchse aus Kunststoff, beispielsweise durch Spritzgießen hergestellt, so dass bei geeigneter Materialwahl eine sehr einfache und präzise Fertigung ermöglicht ist. An einer rückseitigen Stirnfläche der Dichtbuchse ist eine Erhöhung ausgebildet, die in Anlage an eine Schulter eines die Dichtbuchse aufnehmenden Druckmittelströmungskanals bringbar ist. D. h., erfindungsgemäß werden die Dichtmittel in die Dichtbuchse integriert, so dass kein gesondertes Bauelement beispielsweise ein O-Ring aufgesetzt werden muss und der Montageaufwand somit verringert ist.

Diese Erhöhung ist erfindungsgemäß im Bereich des Innenumfangs der Dichtbuchse ausgebildet und läuft zum Außenumfang hin in der Stirnfläche aus. Dabei wird es besonders bevorzugt, wenn die Erhöhung kegelstumpfförmig ausgebildet ist, wobei dieser Kegelstumpf zum Innnenumfang hin ansteigt.

Es zeigte sich, dass die Dichtwirkung bei einem Kegelwinkel im Bereich von 8° bis 10° optimal ist.

Bei einem besonders bevorzugten Ausführungsbeispiel erstreckt sich die Erhöhung in Radialrichtung etwa über ein Drittel der Ringstirnfläche der Dichtbuchse.

Zur weiteren Verbesserung der Dichtung kann stirnseitig im Bereich zwischen dem Außenumfang und der Erhöhung eine zusätzliche umlaufende Dichtrippe vorgesehen werden, deren Höhe oder Axialerstreckung derjenigen der Erhöhung entspricht.

Bei der erfindungsgemäßen Lösung erfolgt die Abdichtung im Bereich des Außenumfangs der Dichtbuchse vorzugsweise über eine integrierte Dichtlippe, die durch eine im Bereich einer vorderen Stirnfläche der Dichtbuchse vorgesehene Aussparung gebildet ist. Diese wird zur rückwärtigen Stirnfläche hin tiefer.

Zur weiteren Verbesserung der Abdichtung und zum Ausgleich von Schrumpfungen kann am Außenumfang der Dichtbuchse zumindest eine weitere Ringnut im Axialabstand zur Aussparung vorgesehen werden.

Die Anpressung der Dichtbuchse in Axialrichtung und Radialrichtung an die Anlageflächen des Druckmittelströmungskanals ist optimiert, wenn die Innenumfangswandung im Bereich der vorderen Stirnfläche konisch ausgebildet ist, so dass die Druckkräfte definiert in Axial- und Radialrichtung wirken.

Prinzipiell lässt sich die erfindungsgemäße Dichtbuchse bei beliebigen hydraulischen Geräten einsetzen, wobei in einer Platte oder einem Gehäuse ein Druckmittelströmungskanal ausgebildet ist, in den die Dichtbuchse eingesetzt ist.

Dabei wird die Dichtbuchse entweder entlang ihrer Erhöhung an einer Umfangskante einer Gegenplatte oder an einer Schulter abgestützt, so dass die Umfangskante im Bereich der Erhöhung anliegt. Im Bereich zwischen der Erhöhung und der Dichtrippe kann ein zusätzlicher Dichtring abgestützt sein. Dabei kann die Gegenplatte mit einer Ausdrehung zur Abstützung des Dichtrings versehen sein.

Bei einem derartigen hydraulischen Gerät wird es bevorzugt, wenn die Dichtbuchse sowohl in Axialrichtung als auch in Radialrichtung mit Übermaß eingesetzt ist.

Die Dichtbuchse lässt sich besonders vorteilhaft bei einem Rückschlagventil einsetzen, bei dem ein Schließkörper über eine Feder gegen einen Ventilsitz vorgespannt ist, wobei diese Feder an der vorderen Stirnfläche der Dichtbuchse abgestützt ist. Dabei wird es bevorzugt, wenn der Schließkörper ebenfalls aus Kunststoff hergestellt ist, so dass zum einen die bewegten Massen des Rückschlagventils minimal sind und zum anderen der Verschleiß beim Auftreffen des Schließkegels auf die Dichtbuchse verringert ist.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert.
Es zeigen:
Figur 1 eine geschnittene Teilschnitt eines hydraulischen Gerätes, das mit einem Rückschlagventil ausgeführt ist;
Figur 2 eine Schnittdarstellung einer Dichtbuchse des hydraulischen Gerätes aus Figur 1;
Figur 3 ein Detail X der Dichtbuchse;
Figur 4 ein Detail Y der Dichtbuchse und
Figur 5 ein weiteres Ausführungsbeispiel einer Dichtbuchse.

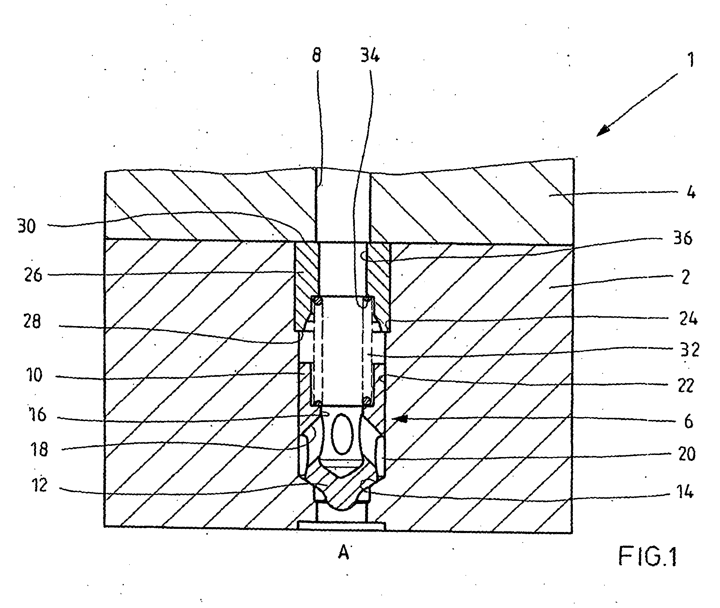

Figur 1 zeigt eine geschnittene Teildarstellung eines hydraulischen Gerätes, beispielsweise eines Mobilsteuerblocks 1 der in Plattenbauweise ausgeführt ist und eine Platte 2 hat, der eine Gegenplatte 4 zugeordnet ist. In die Platte 2 ist ein Rückschlagventil 6 eingesetzt, das in seiner gezeigten Sperrstellung den Druckmittelströmungspfad zwischen einem Eingangsanschluss A und einem in der Gegenplatte 4 ausgebildeten Ausgangskanal 8 absperrt und in der Öffnungsstellung diese Verbindung aufsteuert.

Das Rückschlagventil 6 hat einen Schließkörper 10, der mit einem Kegel 12 gegen einen entsprechend ausgebildeten Ventilsitz 14 vorgespannt ist. Der Schließkörper 10 ist als Hohlkolben ausgeführt, wobei eine Innenbohrung 16 über Schrägkanäle 18 in einem Ringraum 20 mündet, der durch eine Vielzahl von Taschen am Außenumfang des Schließkörpers 10 ausgebildet ist, wobei jeweils eine der Schrägbohrungen 18 in einer Tasche mündet. Der Grundaufbau eines derartigen Schließkörpers 10 ist in der nachveröffentlichten Patentanmeldung DE 103 16 230 beschrieben.

Der kegelige Ventilsitz 14 ist als Radialschulter einer Ventilbohrung 22 ausgebildet, in der der Schließkörper 10 axial verschiebbar geführt ist. Diese Ventilbohrung 22 mündet einerseits in dem Anschluss A und andererseits in dem Ausgangskanal 8 der Gegenplatte 4. Die Ventilbohrung 22 ist zum Ausgangskanal 8 hin über eine Anlageschulter 24 erweitert. In den erweiterten Bereich ist eine Dichtbuchse 26 eingesetzt, die mit ihrem Außenumfang dichtend an der Umfangswandung der Ventilbohrung 22 anliegt und mit ihrer in Figur 1 unten liegenden vorderen Stirnfläche 28 an der Anlageschulter 24 und mit ihrer rückseitigen Stirnfläche 30 (oben in Figur 1) an der Gegenplatte 4 abgestützt ist. Bei dem dargestellten Ausführungsbeispiel sind der Außendurchmesser und die Axiallänge der Dichtbuchse 26 etwas größer als der Durchmesser des axial erweiterten Teils der Ventilbohrung 22 bzw. der Axialabstand zwischen der Anlagefläche der Gegenplatte 4 und der Anlageschulter 24 ausgebildet, so dass die Dichtbuchse 26 mit Presspassung eingesetzt ist.

Beim dargestellten Ausführungsbeispiel wirkt die Dichtbuchse 26 als Federteller, wobei eine den Schließkörper 10 gegen den Ventilsitz 14 vorspannende Feder 32 an einer Radialschulter 34 einer Dichtbuchsenbohrung 36 abgestützt ist.

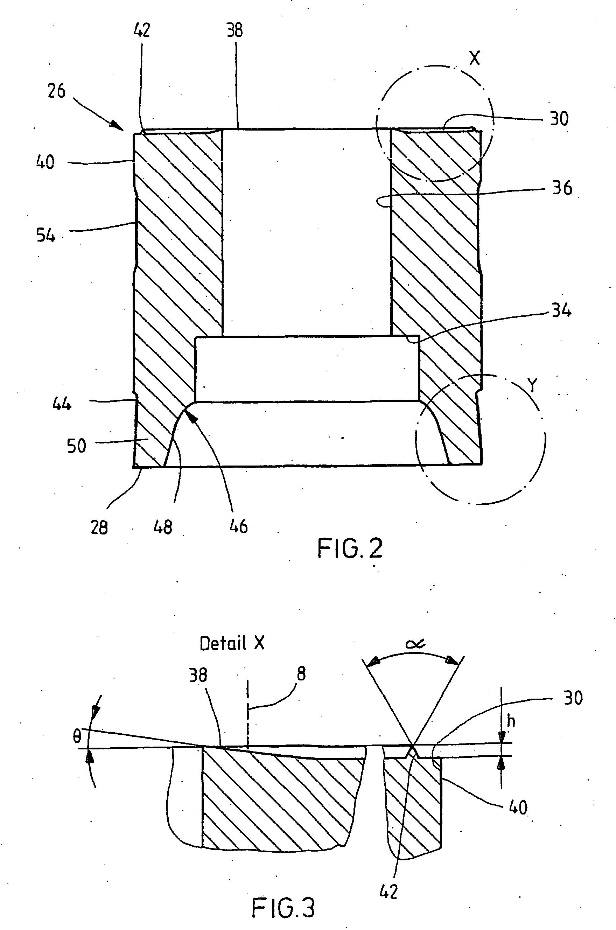

Weitere Details der Dichtbuchse 26 werden anhand der Darstellung gemäß den Figuren 2 bis 4 erläutert. Figur 2 zeigt eine vergrößerte Schnittdarstellung der beim Ausführungsbeispiel gemäß Figur 2 verwendeten Dichtbuchse 26. Gemäß Figur 2 und dem Detail X ist an der rückseitigen Stirnfläche 30 eine kegelstumpfförmige Erhöhung 38 ausgebildet, in der die Dichtbuchsenbohrung 36 mündet. Wie insbesondere aus dem Detail X (Figur 3) hervorgeht, läuft die Erhöhung 38 im Abstand zum Außenumfang 40 der Dichtbuchse 26 in der Stirnfläche 30 aus, der Kegelwinkel θ beträgt bei dem dargestellten Ausführungsbeispiel etwa 8°. Demgemäß erstreckt sich die Erhöhung 38 in Radialrichtung etwa ein Drittel über die Ringstirnfläche, die durch den Außenumfang 40 und die Dichtbuchsenbohrung 36 begrenzt ist. Die Dichtbuchse 26 liegt mit der Erhöhung 38 an der Gegenplatte 4 an, wobei der Durchmesser des Ausgangskanals 8 und die Abmessungen der Erhöhung 38 so gewählt sind, dass die Erhöhung 38 etwas in den Ausgangskanal 8 eintaucht und somit dessen Mündungsumfangskante (gestrichelt in Figur 3) auf der Kegelfläche aufsitzt. Durch diese Konstruktion ist stirnseitig eine zuverlässige Abdichtung mittels der Dichtbuchse 26 gewährleistet.

Zur Verbesserung der Abdichtung ist bei dem dargestellten Ausführungsbeispiel im Abstand zu dem Auslaufbereich der Erhöhung 38 und zu dem Aussenumfang 40 eine umlaufende Dichtrippe 42 ausgebildet, deren Höhe h gleich der Höhe der Erhöhung ist. Der Spitzenwinkel α der Dichtrippe 42 beträgt beim dargestellten Ausführungsbeispiel etwa 60°. Diese liegt im Einbauzustand ebenfalls an der zugewandten Großfläche der Gegenplatte 4 an und bildet so eine zusätzliche Dichtung.

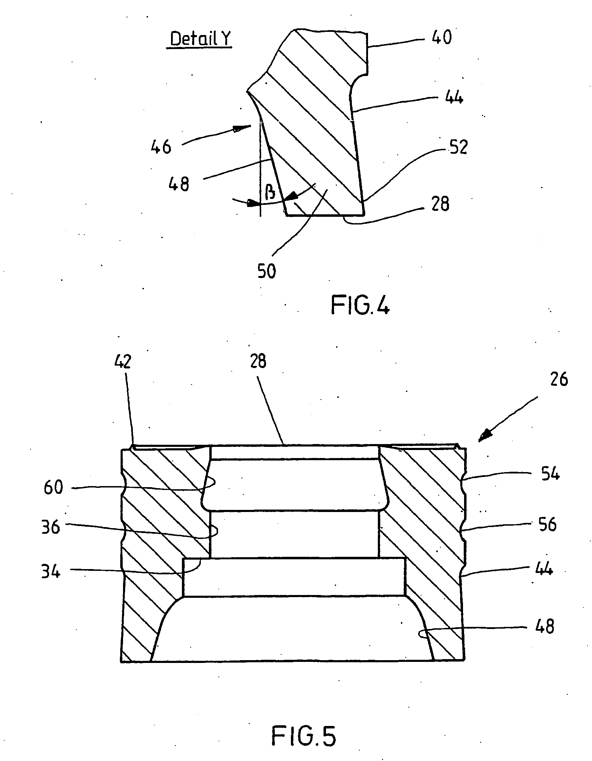

Gemäß dem in Figur 4 dargestellten Detail Y aus Figur 2 ist am Außenumfang 40 der Dichtbuchse 26.im Bereich der vorderen Stirnfläche 28 eine umlaufende Ausnehmung 44 ausgebildet, die die an der die Stirnfläche 28 begrenzenden Umfangskante beginn und sich nach hinten, d. h. weg von der vorderen Stirnfläche 28 allmählich vertieft.

Gemäß Figur 2 öffnet sich der durch die Radialschulter 34 radial erweiterete vordere Teil (unten in Figur 2) der Dichtbuchsenbohrung 36 über eine Innenausnehmung 46, deren Umfangswandung über einen kegelförmigen Abschnitt 48 in der vorderen Stirnfläche 28 mündet. Durch die sich nach hinten vertiefende Ausnehmung 44 und den kegelförmigen Abschnitt 48 wird der vordere Teil des Mantels der Dichtbuchse 26 so verjüngt, dass eine Dichtlippe 50 gebildet wird, die mit einem Umfangsbereich 52 (Figur 4) dichtend an der Innenumfangswandung der Ventilbohrung 22 anliegt. Der Kegelwinkel β des kegelförmigen Abschnitts 48 beträgt beim dargestellten Ausführungsbeispiel etwa 15°. Die im Inneren der Dichtbuchse 26 wirkende Druckkraft wird entsprechend dieses Kegelwinkels in eine Axial- und eine Radialkomponente zerlegt, über die die Dichtlippe 50 in Radialrichtung nach aussen beaufschlagt wird und über die die Dichtbuchse 26 zusätzlich in Axialrichtung gegen die Gegenplatte 4 gedrückt wird. D. h., bei dem dargestellten Ausführungsbeispiel wird die Dichtbuchse 26 im Bereich der Dichtlippe 50 bewußt mit einer gewissen Elastizität ausgeführt, um die Dichtwirkung zu erhöhen.

Bei dem in Figur 2 dargestellten Ausführungsbeispiel der Dichtbuchse ist im Axialabstand zur Ausnehmung 44 eine Ringnut 54 ausgebildet. Diese Ringnut 54 trägt dazu bei, dass beim Schrumpfen die Maßhaltigkeit der an der Innenumfangswandung der Ventilbohrung 22 anliegenden Bereiche der Dichtbuchse nur wenig beeinflußt wird. Des weiteren wird auch die Dichtigkeit des Außenumfangs verbessert.

Figur 5 zeigt ein weiteres Ausführungsbeispiel einer Dichtbuchse 26, wie sie bei einem hydraulischen Gerät 1 gemäß Figur 1 einsetzbar ist. Die Ausgestaltung der kegelstumpfförmigen Erhöhung 28, der Dichtrippe 42, der Ausnehmung 44 und des kegelförmigen Abschnitts 48 ist im Wesentlichen wie beim vorbeschriebenen Ausführungsbeispiel gewählt, so dass weitere diesbezügliche Erläuterungen entbehrlich sind. Das in Figur 5 dargestellte Ausführungsbeispiel unterscheidet sich vom vorbeschriebenen Ausführungsbeispiel im Wesentlichen darin, dass am Außenumfang anstelle einer einzigen, vergleichsweise großflächigen Ringnut 54 zwei im Querschnitt kreissegmentförmige Ringnuten 54, 56 ausgebildet sind, so dass eine zusätzliche Dichtstelle am Außenumfang ausgebildet ist.

Ein weiterer Unterschied besteht darin, dass in dem durch die Radialschulter 34 radial zurückgestuften hinteren Abschnitt der Dichtbuchsenbohrung 36 eine umlaufende Aussparung 60 ausgebildet ist, die zunächst relativ schnell an Tiefe zunimmt und nach Erreichen eines Scheitels allmählich zur Erhöhung 28 hin ansteigt. Die Funktion dieser Aussparung 60 ist im Wesentlichen die gleiche wie diejenige der Ausnehmung 44 - es wird im Bereich der Erhöhung 28 bewußt eine Materialschwächung herbeigeführt, durch die dem Anlagebereich der Erhöhung 28 an die Gegenplatte 4 eine Elastizität verliehen wird, durch die gewährleistet ist, dass die Dichtbuchse 26 in Axialrichtung dichtend gegen die Gegenplatte 4 vorgespannt werden kann. Diese Vorspannung wird - wie beim vorbeschriebenen Ausführungsbeispiel durch das axiale und radiale Übermaß der Dichtbuchse 26 bewirkt.

Der Anstellwinkel der längeren, zur Erhöhung 28 hin ansteigenden Flanke der Aussparung 60 beträgt beim dargestellten Ausführungsbeispiel etwa 12°, der entsprechende Anstellwinkel der Ausnehmung 44 ist etwas kleiner und liegt etwa bei 2°.

Beide vorbeschriebenen Dichtbuchsen 26 sind im Spritzgießverfahren aus Kunststoff hergestellt und bestehen aus einem vergleichsweise verschleißfestem Kunststoff, beispielsweise PEEK oder POM.

Die stirnflächenseitige Abdichtung der Dichtbuchse 26 kann verbessert werden, wenn ein zusätzlicher Dichtring im Bereich zwischen der Erhöhung 38 und der Dichtrippe 42 an der rückseitigen Stirnseite 30 angeordnet wird, der dann stirnseitig an der Gegenplatte 4 anliegt. Der Dichtring kann dabei an einer Ausdrehung in einer Stirnfläche der Gegenplatte 4 abgestützt werden. Dabei kann eine Gegenplatte 4 mit einem durchgehenden Ausgangskanal 8 verwendet werden, der an einer Stirnfläche der Gegenplatte mit seinem Querschnitt mündet (siehe Fig. 1). An der anderen Stirnflächenseite hat die Gegenplatte 4 die Ausdrehung zur Aufnahme des Dichtrings. Die Gegenplatte 4 wird abhängig vom Verwendungszweck entweder wie in Figur 1 oder mit der Ausdrehung zur Platte 2 weisend montiert. Im letztgenannten Fall kann dann zusätzlich ein Dichtring eingesetzt werden, der dichtend an der Platte 2 anliegt.

Selbstverständlich können anstelle der vorbeschriebenen Geometrien, insbesondere der Kegelwinkel auch andere Abmessungen verwendet werden, solang die Dichtfunktion in Axial- und/oder Radialrichtung nicht verschlechtert wird. Der die Dichtbuchse 26 aufnehmende Druckmittelströmungskanal kann auch als Gehäusebohrung (ohne Platten) ausgeführt sein.

Offenbart sind eine Dichtbuchse sowie ein mit einer derartigen Dichtbuchse ausgeführtes hydraulisches Gerät und ein Rückschlagventil. Die Dichtbuchse ist aus Kunststoff hergestellt und hat an einer Stirnfläche eine vorzugsweise kegelförmige Erhöhung, die in dichtende Anlage an eine Anlageschulter bringbar ist.

### Bezugszeichenliste:

- 1: Mobilsteuerblock
- 2: Platte
- 4: Gegenplatte
- 6: Rückschlagventil
- 8: Ausgangskanal
- 10: Schließkörper
- 12: Kegel
- 14: Ventilsitz
- 16: Innenbohrung
- 18: Schrägbohrung
- 20: Ringraum
- 22: Ventilbohrung
- 24: Anlageschulter
- 26: Dichtbuchse
- 28: vordere Stirnfläche
- 30: rückseitige Stirnfläche
- 32: Feder
- 34: Radialschulter
- 36: Dichtbuchsenbohrung
- 38: Erhöhung
- 40: Außenumfang
- 42: Dichtrippe
- 44: Ausnehmung
- 46: Innenausnehmung
- 48: kegelförmiger Abschnitt
- 50: Dichtlippe
- 52: Dichtumfangskante
- 54: Ringnut
- 56: Ringnut
- 58: Innenumfangsnut
- 60: Aussparung

## Patentansprüche

1. Dichtbuchse zum Einsetzen in einen Druckmittelströmungskanal, an deren Außenumfang Dichtmittel vorgesehen sind, wobei die Dichtbuchse (26) aus Kunststoff hergestellt ist, und an einer rückseitigen Stirnfläche (30) eine in Axialrichtung vorstehende Erhöhung (38) ausgebildet ist, die in dichtende Anlage an eine Schulter des Druckmittelströmungskanals (22) bringbar ist, **dadurch gekennzeichnet, dass** die Erhöhung (38) im Bereich eines Innenumfangs (36) ausgebildet ist und zum Außenumfang (40) in der rückseitigen Stirnfläche (30) hin ausläuft.

2. Dichtbuchse nach Patentanspruch 1, wobei sich die Erhöhung (38) in Radialrichtung etwa über ein Drittel der Durchmesserdifferenz von Außen- und Innenumfang (40, 36) erstreckt.

3. Dichtbuchse nach einem der Patentansprüche 1 oder 2, wobei die Erhöhung (38) kegelstumpfförmig ausgebildet ist und zu einem Innenumfang (36) hin ansteigt.

4. Dichtbuchse nach Patentanspruch 3, wobei die kegelstumpfförmige Erhöhung (38) mit der rückseitigen Stirnfläche (30) einen Kegelwinkel im Bereich von 8° bis 10° anschließt.

5. Dichtbuchse nach einem der vorhergehenden Patentansprüche, wobei im Bereich zwischen der Erhöhung (38) und dem Außenumfang (40) an der rückseitigen Stirnfläche (30) eine umlaufende Dichtrippe (42) ausgebildet ist.

6. Dichtbuchse nach Patentanspruch 5, wobei die Dichtrippe (42) in Axialrichtung die gleiche Höhe (h) wie die Erhöhung (38) hat.

7. Dichtbuchse nach einem der vorhergehenden Ansprüche, mit einer am Außenumfang (40) der Dichtbuchse (26) im Bereich einer vorderen Stirnfläche (28) ausgebildeten Dichtlippe (50), die durch eine zur rückseitigen Stirnfläche (20) hin tiefer werdende Aussparung (44) am Außenumfang ausgebildet ist.

8. Dichtbuchse nach Patentanspruch 7, wobei am Außenumfang (40) im Axialabstand zur Ausnehmung (44) zumindest eine Ringnut (54, 56) ausgebildet ist.

9. Dichtbuchse nach einem der vorhergehenden Patentansprüche, wobei eine Innenumfangswandung (48) zu einer vorderen Stirnfläche (28) hin erweitert ist, so dass Druckkräfte in diesem Bereich in Axial- und Radialrichtung wirken.

10. Dichtbuchse nach einem der vorhergehenden Patentansprüche, wobei an der Innenumfangswandung in der Nähe zur rückseitigen Stirnfläche (30) eine umlaufende Ausnehmung (60) ausgebildet ist, die zur Stirnfläche (42) hin ausläuft.

11. Rückschlagventil mit einem Schließkörper (10), der über eine an einer Dichtbuchse (26) gemäß einem der vorhergehenden Ansprüche abgestützten Feder (32) gegen einen Ventilsitz (14) vorgespannt ist.

12. Rückschlagventil nach Patentanspruch 11 wobei der Schließkörper (10) ebenfalls aus Kunststoff hergestellt ist.

13. Hydraulisches Gerät mit einem Druckmittelströmungskanal versehen ist, in den eine Dichtbuchse (26) gemäß einem der Ansprüche 1 bis 10 eingesetzt ist.

14. Gerät nach Anspruch 13, mit einer Platte (2) und einer Gegenplatte (4), wobei die Dichtbuchse (26) in Axialrichtung entlang ihrer Erhöhung (38) an der Gegenplatte (4) abgestützt ist und der Druckmittelströmungskanal (8) im Bereich der Gegenplatte (4) einen größeren Durchmesser als eine Dichtbuchsenbohrung (36) hat.

15. Gerät nach Anspruch 13 oder 14 und mit einer Dichtbuchse (26) nach Anspruch 5, wobei an der rückseitigen Stirnfläche (30) der Dichtbuchse (26) zwischen der Erhöhung (38) und der Dichtrippe (32) ein Dichtring abgestützt ist.

16. Gerät nach einem der Ansprüche 13 bis 15 mit einem Rückschlagventil nach Anspruch 11 oder 12.

17. Gerät nach einem der Ansprüche 13 bis 16 oder Rückschlagventil nach Anspruch 11 oder 12 mit einem Druckmittelströmungskanal (22, 8) in den eine Dichtbuchse (26) gemäß einem der Ansprüche 1 bis 10 mit radialem und axialen Übermaß eingesetzt ist

## Claims

1. A sealing bush for being inserted in a hydraulic fluid flow passage at the outer circumference of which sealing means are provided, wherein the sealing bush (26) is made of plastic and at a rear end face (30) an elevation (38) projecting in axial direction is formed which can be brought into sealing contact with a shoulder of the hydraulic fluid flow passage (22), **characterized in that** the elevation (38) is formed in the area of an inner circumference (36) and shallows toward the outer circumference (40) in the rear end face (30).

2. A sealing bush according to claim 1, wherein the elevation (38) extends in radial direction approximately over one third of difference in diameter of outer and inner circumference (40, 36).

3. A sealing bush according to any one of claims 1 or 2, wherein the elevation (38) has a frusto-conical shape and ascends toward an inner circumference (36).

4. A sealing bush according to claim 3, wherein the frusto-conical elevation (38) forms a taper angle within the range of from 8° to 10° with the rear end face (30).

5. A sealing bush according to any one of the preceding claims, wherein in the area between the elevation (38) and the outer circumference (40) at the rear end face (30) a circumferential sealing rib (42) is formed.

6. A sealing bush according to claim 5, wherein in axial direction the sealing rib (42) has the same height (h) as the elevation (38).

7. A sealing bush according to any one of the preceding claims, comprising a sealing lip (50) formed at the outer circumference (40) of the sealing bush (26) in the area of a front end face (28), which sealing lip is formed by a recess (44) at the outer circumference becoming deeper toward the rear end face (20).

8. A sealing bush according to claim 7, wherein at the outer circumference (40) at least one annular groove (54, 56) is formed at an axial distance from the recess (44).

9. A sealing bush according to any one of the preceding claims, wherein an inner circumferential wall (48) is extended toward a front end face (28) so that compressive forces act in this area in the axial and radial directions.

10. A sealing bush according to any one of the preceding claims, wherein a circumferential recess (60) which shallows out toward the end face (42) is formed at the inner circumferential wall in the vicinity of the rear end face (30).

11. A check valve comprising a locking member (10) which is biased against a valve seat (14) via a spring (32) supported on a sealing bush (26) in accordance with any one of the preceding claims.

12. A check valve according to claim 11, wherein the locking member (10) is likewise made of plastic.

13. A hydraulic unit comprising a hydraulic fluid flow passage in which a sealing bush (26) in accordance with any one of the claims 1 to 10 is inserted.

14. A unit according to claim 13, comprising a plate (2) and a counter-plate (4), wherein the sealing bush (26) is supported on the counter-plate (4) in axial direction along its elevation (38) and the hydraulic fluid flow passage (8) has a larger diameter in the area of the counter-plate (4) than a sealing bush bore (36).

15. A unit according to claim 13 or 14 and comprising a sealing bush (26) according to claim 5, wherein a sealing ring is supported on the rear end face (30) of the sealing bush (26) between the elevation (38) and the sealing rib (32).

16. A unit according to any one of the claims 13 to 15 comprising a check valve according to claim 11 or 12.

17. A unit according to any one of the claims 13 to 16 or check valve according to claim 11 or 12 comprising a hydraulic fluid flow passage (22, 8) in which a sealing bush (26) according to any one of the claims 1 to 10 is inserted with radial and axial oversize.

## Revendications

1. Douille étanche à mettre en place dans un conduit de fluide sous pression, sur le pourtour extérieur de laquelle sont prévus des moyens d'étanchéité, ladite douille étanche (26) étant réalisée en matière plastique, et une surélévation (38), en saillie dans la direction axiale, est réalisée sur une face frontale arrière (30) et peut être amenée en appui étanche contre un épaulement du conduit de fluide sous pression (22), **caractérisée en ce que** la surélévation (38) est réalisée dans la zone d'un pourtour intérieur (36), et le pourtour extérieur (40) se termine ici dans la face frontale arrière (30).

2. Douille étanche selon la revendication 1, dans laquelle la surélévation (38) s'étend dans la direction radiale à peu près sur un tiers de la différence de diamètre entre le pourtour extérieur (40) et le pourtour intérieur (36).

3. Douille étanche selon la revendication 1 ou 2, dans laquelle la surélévation (38) est réalisée en forme de cône tronqué et s'élargit vers le pourtour intérieur (36).

4. Douille étanche selon la revendication 3, dans laquelle la surélévation (38) tronconique délimite avec la face frontale arrière (30) un angle de cône dans la plage de 8° à 10°.

5. Douille étanche selon l'une quelconque des revendications précédentes, dans laquelle une nervure d'étanchéité (42) périphérique est réalisée sur la face frontale arrière (30) dans la zone entre la surélévation (38) et le pourtour extérieur (40).

6. Douille étanche selon la revendication 5, dans laquelle la nervure d'étanchéité (42) a, dans la direction axiale, la même hauteur (h) que la surélévation (38).

7. Douille étanche selon l'une quelconque des revendications précédentes, comportant une lèvre d'étanchéité (50), qui est réalisée sur le pourtour extérieur (40) de la douille étanche (26) dans la zone d'une face frontale avant (28) et qui est formée sur le pourtour extérieur par un évidement (44) dont la profondeur augmente en allant vers la face frontale arrière (30).

8. Douille étanche selon la revendication 7, dans laquelle au moins une rainure annulaire (54, 56) est réalisée sur le pourtour extérieur (40) à distance axiale de l'évidement (44).

9. Douille étanche selon l'une quelconque des revendications précédentes, dans laquelle une paroi périphérique intérieure (48) s'élargit vers une face frontale avant (28), de telle sorte que des forces de pression dans cette zone agissent dans la direction axiale et la direction radiale.

10. Douille étanche selon l'une quelconque des revendications précédentes, dans laquelle, sur la paroi périphérique intérieure, à proximité de la face frontale arrière (30), est réalisé un évidement (60) périphérique, qui se termine vers la face frontale (42).

11. Clapet de non-retour, comportant un corps de fermeture (10), qui est précontraint contre le siège du clapet (14) par un ressort (32) en appui sur une douille étanche (26) selon une des revendications précédentes.

12. Clapet de non-retour selon la revendication 11, dans lequel le corps de fermeture (10) est également réalisé en matière plastique.

13. Dispositif hydraulique, comportant un conduit de fluide sous pression, dans lequel est insérée une douille étanche (26) selon l'une quelconque des revendications 1 à 10.

14. Dispositif selon la revendication 13, comportant une plaque (2) et une contre-plaque (4), dans lequel la douille étanche (26) est en appui contre la contre-plaque (4) dans la direction axiale le long de sa surélévation (38), et le conduit de fluide sous pression (8) a, dans la zone de la contre-plaque (4), un diamètre plus grand que celui d'une forure (36) de la douille étanche.

15. Dispositif selon la revendication 13 ou 14, et avec une douille étanche (26) selon la revendication 5, dans lequel une bague d'étanchéité est en appui sur la face frontale arrière (30) de la douille étanche (26) entre la surélévation (38) et la nervure d'étanchéité (32).

16. Dispositif selon l'une quelconque des revendications 13 à 15, comportant un clapet de non-retour selon la revendication 11 ou 12.

17. Dispositif selon l'une quelconque des revendications 13 à 16 ou clapet de non-retour selon la revendication 11 ou 12, comportant un conduit de fluide sous pression (22, 8) dans lequel est insérée une douille étanche (26) selon l'une quelconque des revendications 1 à 10 avec une surdimension radiale et axiale.
